# EUROPÄISCHE PATENTSCHRIFT

(11) **EP 1 126 244 B1**
(45) Veröffentlichungstag und Bekanntmachung des Hinweises auf die Patenterteilung: **30.05.2007**
(21) Anmeldenummer: 01101941.1
(22) Anmeldetag: 29.01.2001
(51) Int. Cl.: G01C 21/32

(54) **Navigationssystem**
Navigation system
Système de navigation

(30) Priorität: 18.02.2000 DE 10007348
(43) Veröffentlichungstag der Anmeldung: 22.08.2001
(73) Patentinhaber: Harman Becker Automotive Systems GmbH, 76307 Karlsbad (DE)
(72) Erfinder: Geiger, Erich, Dr. Ing., 75236 Kämpfelbach (DE); Lappe, Dirk, Dipl.-Ing., 76228 Karlsruhe (DE); Wietzke, Joachim, Dr. Ing., 76228 Karlsruhe (DE)
(74) Vertreter: Patentanwälte Westphal, Mussgnug & Partner

(56) Entgegenhaltungen:
- EP-A- 0 786 646
- EP-A- 0 921 509
- DE-A- 19 734 365
- US-A- 5 933 100
- US-A- 6 018 695

## Beschreibung

Die Erfindung betrifft ein Navigationssystem, insbesondere für ein Kraftfahrzeug, gemäß dem Oberbegriff des Anspruchs 1.

Die bekannten Navigationssysteme, von denen die Erfindung ausgeht, sind aus dem Stand der Technik in einer Vielzahl von Abwandlungen bekannt. Solch ein Navigationssystem ermöglicht es einem ortsunkenntlichen Fahrer sich relativ problemlos im Straßennetz zurechtzufinden.

So ist beispielsweise aus der DE 197 34 365 A1 ein mobiler Rundfunkempfänger zum Einsatz in einem Kraftfahrzeug bekannt, welcher mit einer Navigationseinheit kombiniert ist. Der Rundfunkempfänger weist Benutzerschnittstellen und eine Multimedia-Einheit, welche aus mindestens einer digitalen Rundfunkempfängereinheit und einer Rückkanaleinheit besteht, auf. Die Navigationseinheit besteht aus einem Navigationsprozessor und einer Speichereinheit. An die Navigationseinheit ist eine Positionsbestimmungseinheit, eine Sensoreinheit und eine Kommunikationseinheit angeschlossen. Die Benutzer schnittstellen sind an die Multimedia-Einheit angeschlossen und werden von einer Steuereinheit gesteuert.

Bei der in der DE 197 34 365 A1 beschriebenen Anordnung werden die zur Verkehrsleitung und Information benötigten Daten zusammen mit den digitalen Rundfunksignalen übertragen. Über einen Rückkanal werden interaktive Dienste vom Benutzer des Systems initialisiert und gesteuert, d.h. interaktiv genutzt.

In der Speichereinheit sind lediglich Grunddaten, wie beispielsweise Autobahnen, Staatsstraßen, Bundesstraßen und sämtliche Ortsnamen gespeichert. Der Navigationsprozessor kann mit diesen Daten die Zielführung über Straßen höherer Ordnung errechnen. Die weiteren zur Navigation notwendigen Daten, wie beispielsweise Straßennamen, Landstraßen niederer Ordnung, innerstädtische Straßen, erhält der Navigationsprozessor von einer Zentralstelle übermittelt.

In einer ersten Variante sieht die DE 197 34 365 A1 vor, daß der Navigationsprozessor die weiteren zur Navigation notwendigen Daten über die Kommunikationseinheit oder über die im digitalen Rundfunk implementierte Rückkanaleinheit bei einem Diensteprovider anfordert. Die Steuereinheit filtert aus dem Rundfunksignal die übertragenen Navigationsdaten heraus und leitet diese Daten an den Navigationsprozessor weiter.

In einer zweiten Variante sieht die DE 197 34 365 A1 vor, daß zusätzlich zum digitalen Rundfunksignal die weiteren zur Navigation notwendigen Daten, wie beispielsweise Straßennamen und Landstraßen niederer Ordnung, innerstädtische Straßen u.s.w. kontinuierlich zusammen mit dem Rundfunksignal ausgestrahlt werden. Der Navigationsprozessor ermittelt aus dem ständig übertragenen Datenstrom mittels der digitalen Rundfunkempfängereinheit und der Steuereinheit die für die Navigation notwendigen Daten.

Ein wesentliches Problem dieser beiden Varianten liegt darin, daß die für die Navigation notwendigen Daten ständig abrufbereit sein müssen. Fällt beispielsweise die Empfängereinheit aus oder ist der Diensteprovider nicht in der Lage, die angeforderten Daten zur Verfügung zu stellen, so ist eine Zielführung nur noch auf der Basis von Straßen höherer Ordnung möglich.

Die Aufgabe der Erfindung besteht darin, ein bekanntes Navigationssystem so weiterzubilden, daß stets eine hinreichend aktuelle Datenbasis für die Routensuche und Zielführung des Navigationssystems zur Verfügung steht.

Diese Aufgabe wird durch ein Navigationssystem mit den Merkmalen des Anspruchs 1 erfindungsgemäß gelöst.

Vorteilhafte Ausführungen und Weiterbildungen der Erfindung sind in den Unteransprüchen angegeben.

Das erfindungsgemäße Navigationssystem, insbesondere für ein Kraftfahrzeug, weist einen zur Berechnung von Fahrtrouten vorgesehenen Navigationsrechner auf, eine mittelbar oder unmittelbar an den Navigationsrechner angeschlossene Dateneingabeeinheit, welche zur Start- und Zieleingabe der Fahrt durch einen Benutzer vorgesehen ist, eine mittelbar oder unmittelbar an den Navigationsrechner angeschlossene Datenausgabeeinheit, welche zur Übermittlung von von dem Navigationsrechner berechneten Fahrtroute vorgesehen ist, und eine mittelbar oder unmittelbar an den Navigations- rechner angeschlossene erste Speichereinheit, welche eine für die Fahrtroutenberechnung erforderliche Grunddatenbasis, insbesondere digitale Straßenkarteninformationen, speichert.

Der wesentliche Gedanke der Erfindung besteht darin, daß das Navigationssystem eine mittelbar oder unmittelbar an den Navigationsrechner angeschlossene Kommunikationseinheit aufweist, der über eine Netzwerkverbindung die Grunddatenbasis ergänzende Daten, insbesondere Detailinformationen von digitalen Straßenkarten, zuführbar sind, und eine weitere mittelbar oder unmittelbar an den Navigationsrechner angeschlossene zweite Speichereinheit, in welcher die ergänzenden Daten nicht flüchtig speicherbar sind.

Die auf diese Weise übermittelte (Karten-)Information ergänzt den bereits vorhandenen Datensatz in der ersten Speichereinheit. Die bestehende Information in der ersten Speichereinheit wird also nicht verworfen, sondern weiterverwendet oder ggf. teilweise überlagert.

Das Navigationssystem ist also sehr selbstlernend und adaptiert sich ständig über Updates bzw. Teilupdates zu der bereits vorhandenen Informationsbasis, beispielsweise der oben angeführten digitalen Straßenkarte. Auf diese Weise entsteht nach und nach eine nutzeradaptive Straßenkarte. Der Vorteil liegt darin, daß nach einer kurzen Anlaufphase das Navigationssystem über einen Grunddatensatz für die Navigation verfügt. Die Übertragung von redundanten Daten wird weitestgehend vermieden.

Das erfindungsgemäße Navigationssystem sieht vor, daß die Netzwerkverbindung beispielsweise über "Bluetooth" oder das "Global System for Mobile Communications" (GSM) aufgebaut ist. Beide Systeme stellen einen ständig verfügbaren Zugriff auf die anzufordernde Datenbasis sicher, welche beispielsweise über das Internet zeit- und ortsunabhängig zur Verfügung gestellt wird.

Die Erfindung sieht weiterhin vor, daß die ergänzenden Daten, auch Daten für die Routensuche und Zielführung umfassen. Hierzu gehören insbesondere aktuelle Verkehrsinformationen, Verkehrsstörungen, Verkehrsanbindungsmöglichkeiten mit öffentlichen oder privaten Verkehrsmitteln etc.

Weiterhin sieht die Erfindung vor, daß die ergänzenden Daten auch Daten für die graphische Darstellung umfassen. Dadurch ist sichergestellt, daß Verbesserungen der Darstellung, wie z.B. die Auflösung, wirklichkeitsgetreue Abbildungen von Straßen mit daran angrenzenden Häusern etc., sobald sie von einem Provider zur Verfügung gestellt werden, dem Benutzer auch tatsächlich zur Verfügung stehen, und daß dieser nicht gezwungen ist, aktuelles digitales Kartenmaterial beispielsweise in Form einer CD-ROM oder einer DVD bei einem Händler nachzukaufen.

Gemäß der Erfindung basieren die Grunddaten auf den gemäß dem Stand der Technik verfügbaren Compact Disks (CD) oder einer Digital Video Versatile Disk (DVD). Alternativ können die Grunddaten auf einer Festplatte (Harddisk: HD), einem Flash-Random Access Memory (Flash-RAM) oder einem Read Only Memory (ROM) abgelegt sein.

Die Erfindung sieht weiterhin vor, daß als zweite Speichereinheit eine Festplatte, ein Flash-RAM oder ein Dynamic Random Access Memory (DRAM) Verwendung findet. Dabei ist auch vorgesehen, daß die zweite Speichereinheit ggf. mit der ersten Speichereinheit identisch sein kann, so daß beispielsweise auf ein CD-Laufwerk oder ein DVD-Laufwerk verzichtet werden kann. Die Grunddatenbasis wird also direkt dem ROM, der Festplatte, dem Flash-RAM oder dem DRAM zur Verfügung gestellt und bei Bedarf oder regelmäßig per Netzwerkverbindung übertragene ergänzende Daten aktualisiert. Ein separater Speicher (ein sogenannter Deltaspeicher) allein für die neu hinzugekommenen ergänzenden Daten ist also nicht notwendig.

Eine besonders vorteilhafte Ausgestaltung der Erfindung sieht vor, daß der Navigationsrechner, die Dateneingabeeinheit, die Datenausgabeeinheit, die erste und zweite Speichereinheit und die Kommunikationseinheit in Ringtopologie angeordnet sind. Der Datenaustausch kann hierbei beispielsweise über einen Datenbus erfolgen.

Die Erfindung sieht weiterhin vor, daß das Navigationssystem eine Positionsbestimmungseinheit aufweist. Dadurch wird es möglich, daß der Navigationsrechner über die Kommunikationseinheit nur diejenigen Daten anfordert, welche er aufgrund seiner aktuellen Position benötigt. Das Update erfolgt also gezielt zeit- und ortsbezogen. Das Navigationssystem braucht also nicht unbedingt für die aktuelle Position notwendigen Grunddaten zur Verfügung zu haben. Weiterhin ist ein komplettes Update der gesamten Region ebenfalls möglich. Auf diese Weise ist das Navigationssystem selbstlernend und adaptiert sich an die Gebiete, die der Fahrer momentan ansteuert.

In einer besonders vorteilhaften Ausgestaltung der Erfindung ist vorgesehen, daß anstelle der leitungsorientierten Netzwerkverbindung eine paketorientierte Datenverbindung besteht. Dies bedeutet, daß dem Navigationssystem die die Grunddatenbasis ergänzenden Daten über einen Datenträger zugeführt werden.

Eine solche Einrichtung ist insbesondere dann sinnvoll, wenn eine Navigation in einem Gebiet erforderlich ist, in dem eine Netzwerkverbindung nicht aufrechterhalten werden kann.

Dieser Datenträger kann beispielsweise eine CD, eine DVD oder eine IC-Speicherkarte (beispielsweise ein Memory Stick) sein.

Ein Ausführungsbeispiel der Erfindung ist in der Zeichnung dargestellt und wird im folgenden näher beschrieben. Es zeigt:

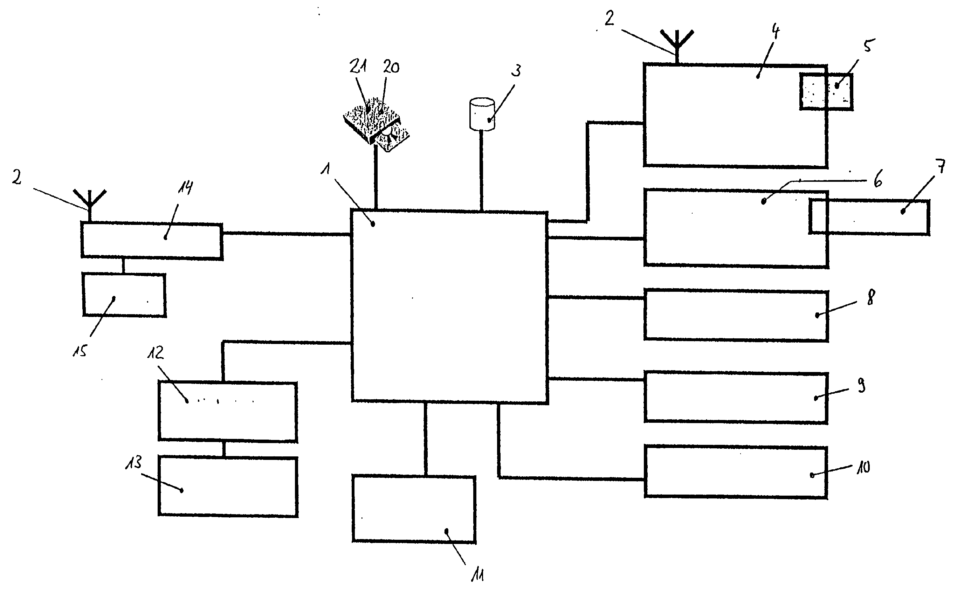

- Fig. 1: Ein erfindungsgemäßes Navigationsgerät

Die Zentraleinheit des erfindungsgemäßen Navigationsgeräts wird durch den Navigationsrechner 1 gebildet. In der Regel wird hierfür ein Microprozessor (µP) verwendet.

Im Beispiel ist an den Navigationsrechner 1 ein Compact Disk-Laufwerk 20 oder ein Digital Video Versatile Disk-Laufwerk 21, eine Festplatte 3 und ein Read Only Memory 10 angeschlossen. Diese Speicher sind dazu vorgesehen, eine Grunddatenbasis, beispielsweise Karteninformationen über Autobahnen, Staatsstraßen, Bundesstraßen, Straßennamen, Landstraßen etc., vorzuhalten.

Diese Grunddatenbasis ergänzende Daten, wie beispielsweise aktuellere Straßenkarteninformationen über die Start- und Zielregion, sind über das Global System for Mobile Communications, eine CD-ROM, eine DVD, oder einen Memory Stick 7, einem Flash Random Access Memory 8, einem Dynamic Random Access Memory 9 und/oder der Festplatte 3 und nachfolgend dem Navigationsrechner 1 zuführbar.

In dem Flash-RAM 8, dem DRAM 9 und/oder auf der Festplatte 3 werden die ergänzenden Daten nichtflüchtig gespeichert, so daß nach und nach ein selbstadaptiertes aktuelles Straßenkartenmaterial zur Verfügung steht.

Der Zugriff auf das GSM erfolgt über einen an den Navigationsrechner 1 angeschlossen GSM Engine 4, welcher über eine Antenne 2 eine Netzwerkverbindung aufrechterhält. Ein daran angeschlossenes Subscriber Identity Module (SIM) 5 kontrolliert die Zugriffsberechtigung und erlaubt eine Abrechnung für die von einem Daten-Provider zur Verfügung gestellten ergänzenden Daten.

Die auf einem Memory Stick 7 verfügbaren ergänzenden Daten, welche beispielsweise regionale Daten beinhalten, sind dem Navigationsrechner 1 via einen Memory Stick Connector 6 zuführbar.

Als weitere Bestandteile weist das Navigationssystem beispielhaft eine Tastatur 11 auf, welche es dem Fahrer des Kraftfahrzeugs erlaubt, die Zielkoordinaten, beispielsweise den Zielort einzugeben.

Als Positionsbestimmungseinheit zur Ermittlung des aktuellen Standorts und der Bewegung des Kraftfahrzeugs weist das Navigationssystem weiterhin gemäß Fig. 1 ein Global Positioning System 14 und ein Gyroskop 15 auf.

Die Ausgabe der Route erfolgt im Beispiel auf einem Bildschirm 13 via einen Graphik Controller 12.

### Bezugszeichenliste

- 1: Navigationsrechner
- 2: Antenne
- 3: Festplatte (HD)
- 4: Global System for Mobile Communication (GSM) Engine
- 5: Subscriber Identity Module (SIM)
- 6: Memory Stick Connector
- 7: Memory Stick
- 8: Flash Random Access Memory (Flash-RAM)
- 9: Dynamic Random Access Memory (DRAM)
- 10: Read Only Memory (ROM)
- 11: Tastatur
- 12: Graphik Controller
- 13: Bildschirm
- 14: Global Positioning System (GPS)
- 15: Gyroskop
- 20: Compact Disk (CD)-Laufwerk
- 21: Digital Video Versatile Disk (DVD)-Laufwerk

## Patentansprüche

1. Navigationssystem,
- mit einem zur Berechnung von Fahrtrouten vorgesehenen Navigationsrechner (1),
- mit einer mittelbar oder unmittelbar an den Navigationsrechner (1) angeschlossenen Dateneingabeeinheit (11), welche zur Start-, Zwischenziel - und/oder Endzieleingabe der Fahrt durch einen Benutzer vorgesehen ist,
- mit einer mittelbar oder unmittelbar an den Navigationsrechner (1) angeschlossenen Datenausgabeeinheit (12, 13), welche zur Übermittlung von von dem Navigationsrechner (1) berechneten Fahrtrouten vorgesehen ist,
- mit einer mittelbar oder unmittelbar an den Navigationsrechner (1) angeschlossenen ersten Speichereinheit (3, 10, 20, 21), welche eine für die Fahrtroutenberechnung erforderliche Grunddatenbasis, insbesondere von digitalen Straßenkarteninformationen, speichert,
**dadurch gekennzeichnet, daß**
- das Navigationssystem eine mittelbar oder unmittelbar an den Navigationsrechner (1) angeschlossene Kommunikationseinheit (4) aufweist, der über eine Netzwerkverbindung die Grunddatenbasis ergänzende Daten, insbesondere Detailinformationen von digitalen Straßenkarten, zuführbar sind, und
- eine weitere mittelbar oder unmittelbar an den Navigationsrechner (1) angeschlossene zweite Speichereinheit (3, 8, 9), in welcher die ergänzenden Daten speicherbar sind.

2. Navigationssystem nach Anspruch 1,
**dadurch gekennzeichnet, daß** die Netzwerkverbindung in der Art des "Bluetooth" ausgebildet ist.

3. Navigationssystem nach einem der vorangegangenen Ansprüche,
**dadurch gekennzeichnet, daß** die Netzwerkverbindung in der Art des "Global System for Mobile Communications" ausgebildet ist.

4. Navigationssystem nach einem der vorangegangenen Ansprüche,
**dadurch gekennzeichnet, daß** die ergänzenden Daten, Daten für die Routensuche und Zielführung sind.

5. Navigationssystem nach einem der vorangegangenen Ansprüche,
**dadurch gekennzeichnet, daß** die ergänzenden Daten, Daten für die graphische Darstellung sind.

6. Navigationssystem nach einem der vorangegangenen Ansprüche,
**dadurch gekennzeichnet, daß** die erste Speichereinheit eine Compactdisk (20) ist.

7. Navigationssystem nach einem der vorangegangenen Ansprüche,
**dadurch gekennzeichnet, daß** die erste Speichereinheit eine Digital Video Versatile Disk (21) ist.

8. Navigationssystem nach einem der vorangegangenen Ansprüche,
**dadurch gekennzeichnet, daß** die erste Speichereinheit eine Festplatte (3) ist.

9. Navigationssystem nach einem der vorangegangenen Ansprüche,
**dadurch gekennzeichnet, daß** die erste Speichereinheit ein Flash Random Access Memory (8) ist.

10. Navigationssystem nach einem der vorangegangenen Ansprüche,
**dadurch gekennzeichnet, daß** die erste Speichereinheit ein Read Only Memory (10) ist.

11. Navigationssystem nach einem der vorangegangenen Ansprüche,
**dadurch gekennzeichnet, daß** die zweite Speichereinheit eine Festplatte (3) ist.

12. Navigationssystem nach einem der vorangegangenen Ansprüche,
**dadurch gekennzeichnet, daß** die zweite Speichereinheit ein Flash Random Access Memory (8) ist.

13. Navigationssystem nach einem der vorangegangenen Ansprüche,
**dadurch gekennzeichnet, daß** die zweite Speichereinheit ein Dynamic Random Access Memory (9) ist.

14. Navigationssystem nach einem der vorangegangenen Ansprüche,
**dadurch gekennzeichnet, daß** der Navigationsrechner (1), die Dateneingabeeinheit (11), die Datenausgabeeinheit (12, 13), die erste und zweite Speichereinheit (3, 8, 9, 10, 20, 21) und die Kommunikationseinheit (4) ringförmig angeordnet sind.

15. Navigationssystem nach einem der vorangegangenen Ansprüche,
**dadurch gekennzeichnet, daß** das Navigationssystem eine Positionsbestimmungseinheit (14, 15) aufweist.

16. Navigationssystem nach einem der vorangegangenen Ansprüche,
**dadurch gekennzeichnet, daß** die ergänzenden Daten ausschließlich die Daten für die Routensuche und Zielführung der vom Benutzer angegebenen Start-, Zwischenziel und Endziele sind.

17. Navigationssystem, insbesondere nach einem der vorangegangenen Ansprüche,
**dadurch gekennzeichnet, daß** der Kommunikationseinheit (4, 6, 20, 21) zusätzlich oder alternativ zur Netzwerkverbindung über einen Datenträger (7) die Grunddatenbasis ergänzende Daten, insbesondere Detailinformationen von digitalen Straßenkarten, zuführbar sind.

18. Navigationssystem nach Anspruch 17,
**dadurch gekennzeichnet, daß** der Datenträger eine Compact Disk ist.

19. Navigationssystem nach Anspruch 17 oder 18,
**dadurch gekennzeichnet, daß** der Datenträger eine Digital Video Versatile Disk ist.

20. Navigationssystem nach einem der Ansprüche 17, 18 oder 19,
**dadurch gekennzeichnet, daß** der Datenträger eine IC-Speicherkarte (7) ist.

21. Verfahren zur Datenverwaltung eines Navigationssystems, insbesondere für ein Kraftfahrzeug, wobei
- in einem Navigationsrechner (1) Fahrtrouten berechnet werden,
- ein Benutzer an einer mittelbar oder unmittelbar an den Navigationsrechner (1) angeschlossenen Dateneingabeeinheit (11) Start-, Zwischenziele und/oder Endziele der Fahrt eingibt,
- eine Datenausgabeeinheit (12, 13) dem Benutzer die von dem Navigationsrechner (1) berechneten Fahrtrouten übermittelt,
- eine mittelbar oder unmittelbar an den Navigationsrechner (1) angeschlossene erste Speichereinheit (3, 10, 20, 21) eine für die Fahrtroutenberechnung erforderliche Grunddatenbasis, ins besondere digitale Straßenkarteninformationen, speichert,
**dadurch gekennzeichnet, daß**
- eine mittelbar oder unmittelbar an den Navigationsrechner (1) angeschlossene Kommunikationseinheit (11) über eine Netzwerkverbindung die Grunddatenbasis ergänzende Daten, insbesondere Detailinformationen von digitalen Straßenkarten, zugeführt werden, und
- eine weitere mittelbar oder unmittelbar an den Navigationsrechner angeschlossene zweite Speichereinheit (3, 8, 9) die ergänzenden Daten speichert.

22. Verfahren zur Datenverwaltung eines Navigationssystems, insbesondere für ein Kraftfahrzeug, wobei
- in einem Navigationsrechner (1) Fahrtrouten berechnet werden,
- ein Benutzer an einer mittelbar oder unmittelbar an den Navigationsrechner (1) angeschlossenen Dateneingabeeinheit (11) Start-, Zwischenziele und Endziele der Fahrt eingibt,
- eine Datenausgabeeinheit (12, 13) dem Benutzer die von dem Navigationsrechner (1) berechneten Fahrtrouten übermittelt,
- eine mittelbar oder unmittelbar an den Navigationsrechner (1) angeschlossene erste Speichereinheit (3, 10, 20, 21) eine für die Fahrtroutenberechnung erforderliche Grunddatenbasis, ins besondere digitale Straßenkarteninformationen, speichert,
**dadurch gekennzeichnet, daß**
- eine mittelbar oder unmittelbar an den Navigationsrechner (1) angeschlossene Kommunikationseinheit (6, 20, 21) über einen Datenträger (7) die Grunddatenbasis ergänzende Daten, ins besondere Detailinformationen von digitalen Straßenkarten, zugeführt werden, und
- eine weitere mittelbar oder unmittelbar an den Navigationsrechner (1) angeschlossene zweite Speichereinheit (3, 8, 9) die ergänzenden Daten speichert.

## Claims

1. A navigation system including a navigational computer (1) provided for calculating journey routes, a data input unit, which is connected directly or indirectly to the navigational computer (1) and is provided for the input of the start, intermediate destination and/or final destination of the journey by a user, a data output unit (12, 13), which is connected directly or indirectly to the navigational computer (1) and is provided to transmit journey routes calculated by the navigational computer (1), a first storage unit (3, 10, 20, 21), which is connected directly or indirectly to the navigational computer (1) and stores a basic database, particularly of digital road map information, necessary for the calculation of journey routes, **characterised in that** the navigation system includes a communication unit (4), which is connected directly or indirectly to the navigational computer (1) and to which data supplementing the basic database, particularly detailed information from digital road maps, may be supplied via a network connection, and a second storage unit (3, 8, 9), which is connected directly or indirectly to the navigational computer (1) and in which the supplementary data may be stored.

2. A navigation system as claimed in Claim 1, **characterised in that** the network connection is of "Bluetooth" type.

3. A navigation system as claimed in one of the preceding claims, **characterised in that** the network connection is of "Global System for Mobile Communications" type.

4. A navigation system as claimed in one of the preceding claims, **characterised in that** the supplementary data are data for route searching and destination guidance.

5. A navigation system as claimed in one of the preceding claims, **characterised in that** the supplementary data is data for graphic representation.

6. A navigation system as claimed in one of the preceding claims, **characterised in that** the first storage unit is a compact disc (20).

7. A navigation system as claimed in one of the preceding claims, **characterised in that** the first storage unit is a Digital Video Versatile Disc (21).

8. A navigation system as claimed in one of the preceding claims, **characterised in that** the first storage unit is a hard disc (3).

9. A navigation system as claimed in one of the preceding claims, **characterised in that** the first storage unit is a Flash Random Access Memory (8).

10. A navigation system as claimed in one of the preceding claims, **characterised in that** the first storage unit is a Read Only Memory (10).

11. A navigation system as claimed in one of the preceding claims, **characterised in that** the second storage unit is a hard disc (3).

12. A navigation system as claimed in one of the preceding claims, **characterised in that** the second storage unit is a Flash Random Access Memory (8).

13. A navigation system as claimed in one of the preceding claims, **characterised in that** the second storage unit is a Dynamic Random Access Memory (9).

14. A navigation system as claimed in one of the preceding claims, **characterised in that** the navigational computer (1), the data input unit (11), the data output unit (12, 13), the first and second storage units (3, 8, 9, 10, 20, 21) and the communication unit (4) are arranged in a ring.

15. A navigation system as claimed in one of the preceding claims, **characterised in that** the navigation system includes a position determination unit (14, 15).

16. A navigation system as claimed in one of the preceding claims, **characterised in that** the supplementary data is exclusively data for route searching and destination guidance of the start, intermediate destination and final destination given by the user.

17. A navigation system, particularly as claimed in one of the preceding claims, **characterised in that** the data supplementing the basic database, particularly detailed information from digital road maps, may be supplied to the communication unit (4,6,20,21), via a data carrier (7) in addition to or alternatively to the network connection.

18. A navigation system as claimed in Claim 17, **characterised in that** the data carrier is a Compact Disc.

19. A navigation system as claimed in Claim 17 or 18, **characterised in that** the data carrier is a Digital Video Versatile Disc.

20. A navigation system as claimed in one of Claims 17, 18 or 19, **characterised in that** the data carrier is an IC Memory Card.

21. A method for managing the data of a navigation system, particularly for a motor vehicle, wherein journey routes are calculated in a navigational computer (1), a user inputs start, intermediate destinations and/or end destinations of the journey at a data input unit connected directly or indirectly to the navigational computer (1), a data output unit (12, 13) transmits the journey routes calculated by the navigational computer (1) to the user, a first storage unit, (3, 10, 20, 21), which is connected directly or indirectly to the navigational computer (1), stores a basic database, particularly digital road map information, necessary for the calculation of journey routes, **characterised in that** data, particularly detailed information from digital road maps, supplementing the basic database is supplied via a network connection to a communication unit (11) connected directly or indirectly to the navigational computer (1), and a further, second storage unit (3, 8, 9), which is connected directly or indirectly to the navigational computer, stores the supplementary data.

22. A method for managing the data of a navigation system, particularly for a motor vehicle, wherein journey routes are calculated in a navigational computer (1) a user inputs start, intermediate destinations and/or end destinations of the journey at a data input unit connected directly or indirectly to the navigational computer (1), a data output unit (12, 13) transmits the journey routes calculated by the navigational computer (1) to the user, a first storage unit, (3, 10, 20, 21), which is connected directly or indirectly to the navigational computer (1), stores a basic database, particularly digital road map information, necessary for the calculation of journey routes, **characterised in that** data, particularly detailed information from digital road maps, supplementing the basic database is supplied to a communication unit (6, 20, 21), which is connected directly or indirectly to the navigational computer, via a data carrier (7) and a further second storage unit, connected directly or indirectly to the navigational computer, stores the supplementary data.

## Revendications

1. Système de navigation
- avec un ordinateur de navigation (1) prévu pour le calcul de trajets,
- avec une unité de saisie de données (11), indirectement ou directement branchée sur l'ordinateur de navigation (1), qui est prévue pour la saisie du point de départ, du point d'arrivée intermédiaire et/ou du point d'arrivée final par un utilisateur,
- avec une unité d'édition de données (12, 13) branchée indirectement ou directement sur l'ordinateur de navigation (1), qui est prévue pour la transmission de trajets calculés par l'ordinateur de navigation (1),
- avec une première unité de mémoire (3, 10, 20, 21), branchée indirectement ou directement sur l'ordinateur de navigation (1), qui mémorise une banque de données de base, notamment d'informations de cartographie routière numériques, qui est nécessaire pour le calcul du trajet,
**caractérisé en ce que**
- le système de navigation comporte une unité de communication (4) branchée indirectement ou directement sur l'ordinateur de navigation (1), à laquelle par l'intermédiaire d'une liaison réseau peuvent être amenées les données complémentaires de la banque de données de base, notamment des informations de cartographie routière numériques détaillées, et
- une unité de mémoire (3, 8, 9) supplémentaire, branchée indirectement ou directement sur l'ordinateur de navigation (1), dans laquelle les données complémentaires peuvent être mémorisées.

2. Système de navigation selon la revendication 1, **caractérisé en ce que** la liaison réseau est conçue à la façon du "Bluetooth".

3. Système de navigation selon l'une quelconque des revendications précédentes, **caractérisé en ce que** la liaison réseau est conçue à la façon du "Global System for Mobile Communications".

4. Système de navigation selon l'une quelconque des revendications précédentes, **caractérisé en ce que** les données complémentaires sont des données pour la recherche du trajet et pour le guidage vers le point d'arrivée.

5. Système de navigation selon l'une quelconque des revendications précédentes, **caractérisé en ce que** les données complémentaires sont des données pour la représentation graphique.

6. Système de navigation selon l'une quelconque des revendications précédentes, **caractérisé en ce que** la première unité de mémoire est un Compact Disk (20).

7. Système de navigation selon l'une quelconque des revendications précédentes, **caractérisé en ce que** la première unité de mémoire est un Digital Video Versatile Disk (21).

8. Système de navigation selon l'une quelconque des revendications précédentes, **caractérisé en ce que** la première unité de mémoire est un disque dur (3).

9. Système de navigation selon l'une quelconque des revendications précédentes, **caractérisé en ce que** la première unité de mémoire est une Flash Random Access Memory (8).

10. Système de navigation selon l'une quelconque des revendications précédentes, **caractérisé en ce que** la première unité de mémoire est une Read Only Memory (10).

11. Système de navigation selon l'une quelconque des revendications précédentes, **caractérisé en ce que** la deuxième unité de mémoire est un disque dur (3).

12. Système de navigation selon l'une quelconque des revendications précédentes, **caractérisé en ce que** la deuxième unité de mémoire est une Flash Random Access Memory (8).

13. Système de navigation selon l'une quelconque des revendications précédentes, **caractérisé en ce que** la deuxième unité de mémoire est une Dynamic Random Access Memory (9).

14. Système de navigation selon l'une quelconque des revendications précédentes, **caractérisé en ce que** l'ordinateur de navigation (1), l'unité de saisie de données (11), l'unité d'édition de données (12, 13), la première et la deuxième unité de mémoire (3, 8, 9, 10, 20, 21) et l'unité de communication (4) sont disposés sous forme annulaire.

15. Système de navigation selon l'une quelconque des revendications précédentes, **caractérisé en ce que** le système de navigation comporte une unité de détermination de la position (14, 15).

16. Système de navigation selon l'une quelconque des revendications précédentes, **caractérisé en ce que** les données complémentaires sont exclusivement les données pour la recherche de la route et pour le guidage vers le point d'arrivée, vers les points de départ, d'arrivée intermédiaire et vers les points finaux indiqués par l'utilisateur.

17. Système de navigation selon l'une quelconque des revendications précédentes, **caractérisé en ce que**, en supplément ou en variante à la liaison réseau, des données complétant la banque de données de base, notamment des informations détaillées de cartes routières numériques sont susceptibles d'être amenées vers l'unité de communication (4, 6, 20, 21), via un support de données(7).

18. Système de navigation selon la revendication 17, **caractérisé en ce que** le support de données est un Compact Disk.

19. Système de navigation selon la revendication 17 ou 18, **caractérisé en ce que** le support de données est un Digital Video Versatile Disk.

20. Système de navigation selon l'une quelconque des revendications 17, 18 ou 19, **caractérisé en ce que** le support de données est une carte mémoire IC (7).

21. Procédé de gestion de données d'un système de navigation, notamment pour un véhicule automobile,
- des trajets étant calculés dans un ordinateur de navigation (1),
- un utilisateur saisissant des points de départ, des points d'arrivée intermédiaires et/ou des points finaux du voyage, dans une unité de saisie de données (11) branchée indirectement ou directement sur l'ordinateur de navigation (1),
- une unité d'édition de données (12, 13) transmettant à l'utilisateur les trajets calculés par l'ordinateur de navigation (1),
- une première unité de mémoire (3, 10, 20, 21) branchée indirectement ou directement sur l'ordinateur de navigation (1) mémorisant une banque de données de base nécessaire pour le calcul du trajet, notamment des informations de cartographie routière numériques, **caractérisé en ce que**,
- via une liaison réseau, des données complétant la banque de données de base, notamment des informations détaillées de cartes routières numériques sont amenées vers une unité de communication (4) branchée indirectement ou directement sur l'ordinateur de navigation (1)
- une unité de mémoire supplémentaire (3, 8, 9), branchée indirectement ou directement sur l'ordinateur de navigation mémorise les données complémentaires.

22. Procédé de gestion de données d'un système de navigation, notamment pour un véhicule automobile,
- des trajets étant calculés dans un ordinateur de navigation (1),
- un utilisateur saisissant des points de départ, des points intermédiaires et/ou des points finaux du voyage, dans une unité de saisie de données (11) branchée indirectement ou directement sur l'ordinateur de navigation (1),
- une unité d'édition de données (12, 13) transmettant à l'utilisateur les trajets calculés par l'ordinateur de navigation (1),
- une première unité de mémoire (3, 10, 20, 21) branchée indirectement ou directement sur l'ordinateur de navigation (1) mémorisant une banque de données de base nécessaire pour le calcul du trajet, notamment des informations de cartographie routière numériques, **caractérisé en ce que**
- des données complétant la banque de données de base, notamment des informations détaillées de cartographie routière numériques sont amenées via un support de données (7) vers une unité de communication (6, 20, 21) branchée directement ou indirectement sur l'ordinateur de navigation (1), et
- une unité de mémoire supplémentaire (3, 8, 9); branchée indirectement ou directement sur l'ordinateur de navigation (1) mémorisant les données complémentaires.
